(19) Europäisches Patentamt

European Patent Office

Office européen des brevets

(11) **EP 4 650 945 A1**

(12) **EUROPEAN PATENT APPLICATION**

(43) Date of publication:
**19.11.2025 Bulletin 2025/47**

(21) Application number: 25179069.7

(22) Date of filing: **27.05.2025**

(51) International Patent Classification (IPC):
*G06F 8/41* *(2018.01)* *G06N 3/08* *(2023.01)*

(52) Cooperative Patent Classification (CPC):
**G06F 8/443; G06N 3/006; G06N 3/04; G06N 3/044; G06N 3/045; G06N 3/0464; G06N 3/047; G06N 3/063; G06N 3/08; G06N 3/082; G06N 3/084; G06N 3/092; G06N 3/10; G06N 3/105; G06N 3/126;**
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **28.05.2024 CN 202410675109**

(71) Applicant: **Beijing Horizon Information Technology Co., Ltd.**
**Beijing 100094 (CN)**

(72) Inventors:
• **DENG, Bowen**
**Beijing, 100094 (CN)**
• **SHEN, Biluo**
**Beijing, 100094 (CN)**

(74) Representative: **Dehns Germany Partnerschaft mbB**
**Theresienstraße 6-8**
**80333 München (DE)**

(54) **METHOD AND APPARATUS FOR GENERATING INSTRUCTION SEQUENCE, ELECTRONIC DEVICE, AND STORAGE MEDIUM**

(57) Disclosed are a method and apparatus for generating an instruction sequence, an electronic device, and a storage medium. The method for generating an instruction sequence includes: determining a computation graph corresponding to a neural network model to be compiled and resource status information on hardware executing the instruction sequence; partitioning the computation graph, to determine multiple computation sub-graphs; generating, based on the computation sub-graphs and the resource status information, instruction sub-sequences corresponding respectively to the computation sub-graphs; and determining, based on the instruction sub-sequences, a target instruction sequence corresponding to the neural network model to be compiled.

FIG. 1

(52) Cooperative Patent Classification (CPC): (Cont.)
**G06N 5/01; G06N 5/022; G06N 7/01; G06N 20/00**

**Description**

**FIELD OF THE INVENTION**

This disclosure relates to the technical field of neural network model compilation, and in particular, to a method and apparatus for generating an instruction sequence, an electronic device, and a storage medium.

**BACKGROUND OF THE INVENTION**

In a compiler, a neural network model to be compiled is typically converted into a layer of intermediate representations (also referred to as a computation graph) that are completely unbound or less bound to hardware information, to facilitate universal conversions and optimizations. Eventually, these intermediate representations further have to be mapped to actual hardware, that is, the computation graph has to be converted into a hardware-executable instruction sequence, to complete generation of the instruction sequence. How to obtain an optimal instruction sequence has become a critical technical problem that urgently needs to be resolved.

**SUMMARY OF THE INVENTION**

To solve the above technical problem, embodiments of this disclosure provide a method and apparatus for generating an instruction sequence, an electronic device, and a storage medium, by which an instruction sequence of optimal or superior performance can be obtained, improving performance of the instruction sequence.

According to a first aspect of this disclosure, there is provided a method for generating an instruction sequence, including: determining a computation graph corresponding to a neural network model to be compiled and resource status information on hardware executing the instruction sequence; partitioning the computation graph, to determine multiple computation sub-graphs; generating, based on the computation sub-graphs and the resource status information, instruction sub-sequences corresponding respectively to the computation sub-graphs; and determining, based on the instruction sub-sequences, a target instruction sequence corresponding to the neural network model to be compiled.

According to a second aspect of this disclosure, there is provided an apparatus for generating an instruction sequence, including: a first processing module, configured to determine a computation graph corresponding to a neural network model to be compiled and resource status information on hardware executing the instruction sequence; a second processing module, configured to partition the computation graph, to determine multiple computation sub-graphs; a third processing module, configured to generate, based on the computation sub-graphs and the resource status information, instruction sub-sequences corresponding respectively to the computation sub-graphs; and a fourth processing module, configured to determine, based on the instruction sub-sequences, a target instruction sequence corresponding to the neural network model to be compiled.

According to a third aspect of this disclosure, there is provided a non-transitory computer readable storage medium, on which a computer program is stored, wherein the computer program, when executed by a processor, causes the processor to implement the method for generating an instruction sequence according to any one of embodiments of this disclosure.

According to a fourth aspect of this disclosure, there is provided an electronic device including: a processor; and a memory configured to store processor-executable instructions. The processor is configured to read the executable instructions from the memory, and execute the instructions to implement the method for generating an instruction sequence according to any one of embodiments of this disclosure.

According to a fifth aspect of this disclosure, there is provided a computer program product, where instructions in the computer program product, when executed by a processor, causes the processor to implement the method for generating an instruction sequence according to any one of embodiments of this disclosure.

Based on a method and apparatus for generating an instruction sequence, an electronic device, and a storage medium according to embodiments of this disclosure, a computation graph corresponding to a neural network model to be compiled is partitioned into multiple computation sub-graphs, facilitating determining, by computation sub-graphs, an instruction sub-sequence of optimal performance for an occupation status on a hardware resource, to obtain a target instruction sequence corresponding to the neural network model to be compiled based on optimal instruction sub-sequences for the computation sub-graphs, effectively enhancing an overall execution performance for the instruction sequence.

**BRIEF DESCRIPTION OF THE DRAWINGS**

FIG. 1 is an exemplary application scenario of a method for generating an instruction sequence according to this disclosure.
FIG. 2 is a schematic flowchart of a method for generating an instruction sequence according to an exemplary embodiment of this disclosure.
FIG. 3 is a schematic flowchart of a method for generating an instruction sequence according to another exemplary embodiment of this disclosure.
FIG. 4 is a schematic flowchart of generating an instruction sub-sequence corresponding to a computation sub-graph according to an exemplary embodiment of this disclosure.
FIG. 5 is a schematic flowchart of generating an instruction sub-sequence corresponding to a computation sub-graph according to another exemplary embodiment of this disclosure.

FIG. 6 is a schematic flowchart of performing training on a policy network according to an exemplary embodiment of this disclosure.

FIG. 7 is a block diagram of a principle of generating an instruction sequence based on reinforcement learning according to an exemplary embodiment of this disclosure.

FIG. 8 is a block diagram of a structure of an apparatus for generating an instruction sequence according to an exemplary embodiment of this disclosure.

FIG. 9 is a block diagram of a structure of an apparatus for generating an instruction sequence according to another exemplary embodiment of this disclosure.

FIG. 10 is a block diagram of a structure of an electronic device according to embodiments of this disclosure.

## DETAILED DESCRIPTION OF THE EMBODIMENTS

To explain this disclosure, exemplary embodiments of this disclosure are described in detail below with reference to accompanying drawings. Clearly, the described embodiments are merely some, not all, of embodiments of this disclosure. It should be understood that this disclosure is not limited to the exemplary embodiments.

It should be noted that, unless otherwise specified, the scope of this disclosure is not limited by relative arrangements, numeric expressions, and numerical values of components and steps described in these embodiments.

### Overview of Disclosure

In implementing this disclosure, the inventor discovered that in a compiler, in general, a neural network model to be compiled is converted into a layer of intermediate representations (also referred to as a computation graph) that are completely unbound or less bound to hardware information, to facilitate universal conversions and optimizations. Eventually, these intermediate representations further have to be mapped to actual hardware, that is, the computation graph has to be converted into a hardware-executable instruction sequence, to complete generation of the instruction sequence. Hardware for example may include a processor (central processing unit, CPU), a neural network processor, a memory, and or other hardware on a device such as a vehicle-mounted terminal, a mobile terminal, etc. In related art, a search cost of generating the instruction sequence is typically lowered by pruning the neural network model, which tends to degrade performance of the instruction sequence.

### Exemplary Overview

Embodiments of this disclosure mainly may include two stages, which are a compilation stage and a run stage, respectively. In the compilation stage, a method for generating an instruction sequence according to embodiments of this disclosure may be implemented, to generate an instruction configured to implement a neural network operation. In the run stage, an image processing method according to embodiments of this disclosure may be implemented based on the instruction generated in the compilation stage, to implement operation processing on an image frame, thereby avoiding waste of a computing resource.

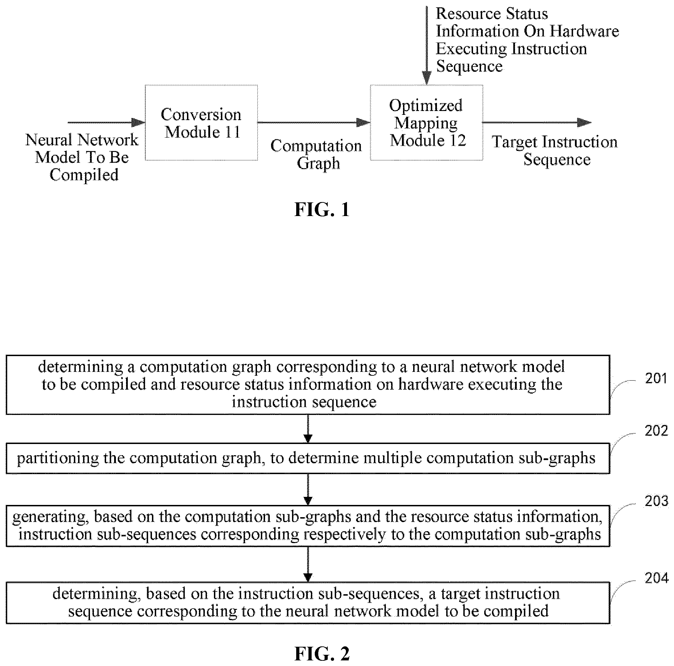

FIG. 1 is an exemplary application scenario of a method for generating an instruction sequence according to this disclosure. As shown in FIG. 1, in a compilation process of a neural network model, a method for generating an instruction sequence according to embodiments of this disclosure may be implemented through an apparatus for generating an instruction sequence (apparatus for short) according to embodiments of this disclosure. The apparatus may include a conversion module 11 and an optimization and mapping module 12. Through the conversion module 11, the neural network model to be compiled may be converted into a computation graph of intermediate representations. Then, through the optimization and mapping module 12, the computation graph may be partitioned, to determine multiple computation sub-graphs, optimal instruction sub-sequences corresponding respectively to the computation sub-graphs may be generated based on the computation sub-graphs and resource status information on hardware executing the instruction sequence, and an optimal target instruction sequence corresponding to the neural network model to be compiled may be determined based on the optimal instruction sub-sequences, thereby obtaining a model instruction sequence of optimal performance, performance of executing the instruction sequence being improved. By a method for generating an instruction sequence according to this disclosure a computation graph corresponding to a neural network model to be compiled is partitioned into multiple computation sub-graphs, facilitating determining, by computation sub-graphs, an instruction sub-sequence of optimal performance for an occupation status of a resource of the hardware executing the instruction sequence, and then effectively enhancing an overall execution performance for the instruction sequence. In addition, corresponding instruction sub-sequences are generated at granularity of computation sub-graphs, lowering a search cost, implementing effective instruction sequence generation without model pruning, which allows to guarantee model performance effectively. The method for generating an instruction sequence according to this disclosure may apply to compilation of any neural network model.

Exemplary Method

FIG. 2 is a schematic flowchart of a method for generating an instruction sequence according to an exemplary embodiment of this disclosure. This embodiment may be applied to an electronic device. The electronic device for example may be a server, a terminal device, etc. As shown in FIG. 2, the method according to embodiments of this disclosure may include steps as follows.

Step 201, Determining a computation graph corresponding to a neural network model to be compiled and resource status information on hardware executing the instruction sequence

The neural network model to be compiled (model for short) may be any neural network model. For example, the neural network model to be compiled may be a target detecting model, a semantic segmentation model, a classification model, etc., with no specific limitation. The neural network model to be compiled may be a pre-trained neural network model. The computation graph is an intermediate representation between an advanced language and a machine-executable language. The computation graph may include operator nodes and connection relationships among operator nodes. An operator node for example may include a data loading node, a data computing node, a data storage node, etc. The data loading node is configured to load data for the data computing node, such as a tensor, a weight, etc.. The data computing node may include operators of various kinds of computation in the model. The data computing node for example may include nodes of operators such as matrix multiplication, convolution, addition of corresponding elements, pooling, multiplication of corresponding elements, etc. The data storage node is a node configured to store a computation result obtained by the data computing node. The connection relationships among operator nodes may represent a sequence for computations performed among the operator nodes. The hardware executing the instruction sequence (referred to as target hardware in embodiments of this disclosure) is hardware on a target machine where the neural network model to be compiled is to be deployed. For example, the target hardware may be hardware in a terminal device such as a vehicle-mounted computing device, a mobile phone, etc. Specifically, the target hardware may include hardware such as a processor (CPU), a neural network processor (NPU), a memory, etc. The resource status information may include information on a status related to a resource such as a computing resource, a storage resource, etc., of the target hardware. Specifically, the resource status information may include information such as a size of a resource, a type of the resource, an occupation status on the resource, fastest release time on the resource, etc. The computing resource may include a processing unit of the target hardware. The processing unit for example may include a convolution (conv) computing unit, a look up table (LUT for short) unit, etc. The storage resource may include a storage unit of the target hardware. The storage unit for example may include an L1 SRAM, an L2 SRAM, etc. The L1 SRAM represents a static random-access memory (SRAM) serving as a primary cache. The L2 SRAM represents an SRAM serving as a secondary cache.

In some optional embodiments, the neural network model to be compiled may be converted into the computation graph based on a conversion relation (also referred to as a conversion rule) between a language corresponding to the neural network model to be compiled and the computation graph.

In some optional embodiments, the resource status information on the target hardware may be obtained based on an actual case of the target hardware.

Step 202, Partitioning the computation graph, to determine multiple computation sub-graphs

A computation sub-graph may include a graphical representation in the computation graph that describes a sequence for computations among one or more groups of operator nodes constituted by the data loading node, the data computing node, and the data storage node. The computation graph then includes the multiple computation sub-graphs. That is, the computation graph is partitioned into the multiple computation sub-graphs.

In some optional embodiments, the multiple computation sub-graphs may be determined based on dependencies among operator nodes in the computation graph. There are respective data dependencies among the multiple computation sub-graphs. For example, output from one computation sub-graph serves as input to another computation sub-graph.

Step 203, Generating, based on the computation sub-graphs and the resource status information, instruction sub-sequences corresponding respectively to the computation sub-graphs

Optimal resource allocation cases may be determined respectively for the computation sub-graphs based on the computation sub-graphs and the resource status information, thereby generating the instruction sub-sequences corresponding respectively to the computation sub-graphs.

In some optional embodiments, in a process of converting the computation sub-graphs into the hardware-executable instruction sequence, one optimal option may be determined from a plurality of optimization options, to meet needed performance of executing the instruction sequence by the hardware. For example, an operation included in a computation sub-graph may be split, where an actual space may be allocated for data, and a scheduling sequence for scheduling instructions may be determined, etc. An optimal selection for the computation sub-graph may be found in such selection space through optimized search (for example, heuristic search such as tree search), thereby generating an optimal instruction sub-sequence corresponding to the computation sub-graph, and then obtaining the target instruction sequence corresponding to the neural network model to be compiled.

In some optional embodiments, the instruction sub-sequences corresponding respectively to the computation sub-graphs further may be generated based on a reinforcement learning model.

Step 204, Determining, based on the instruction sub-sequences, a target instruction sequence corresponding to the neural network model to be compiled

After the respective instruction sub-sequences for the computation sub-graphs are obtained, a sequence of instruction sub-sequences may be obtained based on the respective data dependencies among the computation sub-graphs, thereby obtaining the target instruction sequence corresponding to the neural network model to be compiled.

By a method for generating an instruction sequence according to this disclosure a computation graph corresponding to a neural network model to be compiled is partitioned into multiple computation sub-graphs, facilitating determining, by computation sub-graphs, an instruction sub-sequence of optimal performance for an occupation status of a resource of the hardware executing the instruction sequence, and then effectively enhancing an overall execution performance for the instruction sequence. In addition, corresponding instruction sub-sequences are generated at granularity of computation sub-graphs, lowering a search cost, implementing effective instruction sequence generation without model pruning, which allows to guarantee model performance effectively.

In some optional embodiments, the step 203 of the generating, based on the computation sub-graphs and the resource status information, instruction sub-sequences corresponding respectively to the computation sub-graphs may include a step as follows.

The instruction sub-sequences corresponding respectively to the computation sub-graphs are generated based on the computation sub-graphs and the resource status information by reinforcement learning. Specifically, a candidate action set for each computation sub-graph may be determined in turn based on dependencies among the computation sub-graphs and resource status information updated in real time. The candidate action set may include optional action information corresponding to the computation sub-graph. Each action information corresponds to an intermediate instruction or an instruction. An intermediate instruction is an instruction of an intermediate representation close to a machine executable instruction, and may be converted into a corresponding instruction. Action information may be structured data. Action information may include one or more selectable optimization options. An optimization option for example may include elements corresponding respectively to related information such as an instruction category, a tensor selected for computation, a computation data size, a storage address of generated data, etc.. The generation of instruction sub-sequence is transformed into a reinforcement learning environment, and an optional instruction sub-sequence space is transformed into a candidate action space for reinforcement learning, thereby obtaining the optimal instruction sub-sequence for the computation sub-graph from the candidate action set using the reinforcement learning model. After the optimal instruction sub-sequences for the computation sub-graphs are obtained, an optimal instruction sequence for the neural network model to be compiled may be obtained based on the optimal instruction sub-sequences for the computation sub-graphs, improving instruction sequence generation efficiency.

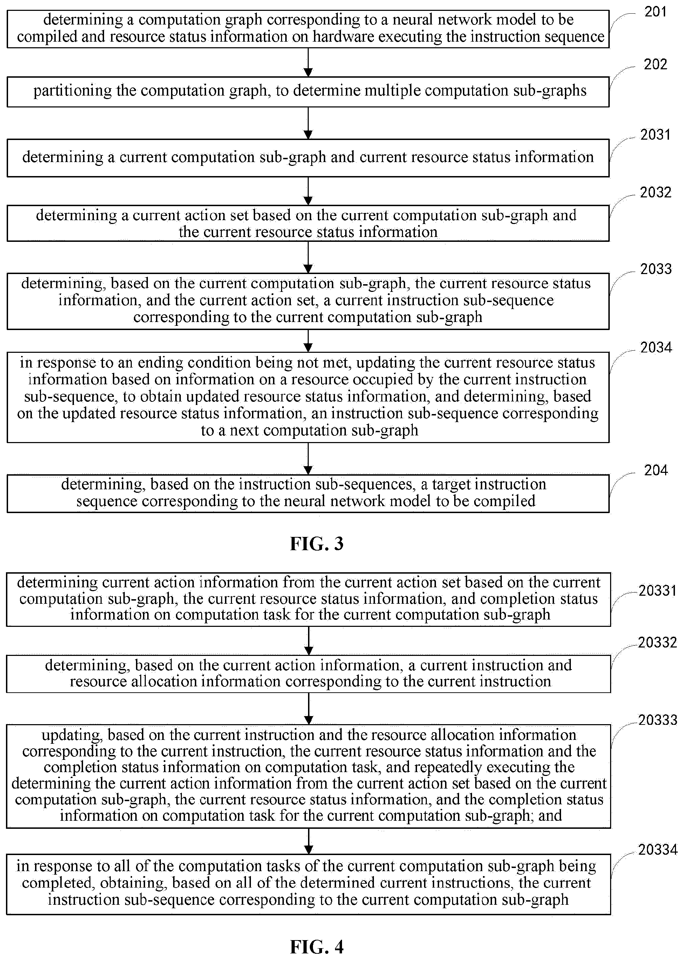

FIG. 3 is a schematic flowchart of a method for generating an instruction sequence according to another exemplary embodiment of this disclosure.

In some optional embodiments, as shown in FIG. 3, based on the embodiment shown in FIG. 2, the step 203 of the generating, based on the computation sub-graphs and the resource status information, instruction sub-sequences corresponding respectively to the computation sub-graphs may include steps as follows.

Step 2031, Determining a current computation sub-graph and current resource status information

The current computation sub-graph is determined based on dependencies among the computation sub-graphs in the computation graph. The current resource status information is determined based on the resource status information on the hardware.

In some optional embodiments, the computation sub-graphs may be determined as the current computation sub-graph in turn based on the dependencies among the computation sub-graphs in the computation graph. The current resource status information is real-time resource status information obtained by updating the resource status information on the hardware in real time based on an occupation status on a resource by a generated instruction sub-sequence. That is, the current resource status information may include currently occupied resource information and currently idle resource information.

In some optional embodiments, first, a computation sub-graph including a starting operator node of the computation graph (which may be referred to as a first computation sub-graph) may be determined as the current computation sub-graph, and initial resource status information (i.e., the resource status information on the hardware determined in step 201) may be determined as the current resource status information. After an instruction sub-sequence for the first computation sub-graph is obtained, the current resource status information may be updated based on an occupation status on a resource by the instruction sub-sequence for the first computation sub-graph, to obtain updated current resource status information, so as to determine current resource status information corresponding to a second computation sub-graph based on the updated current resource status information. The second computation sub-graph, input data of which is in dependency on the first computation sub-graph, may be determined as the current computation sub-graph, the updated current resource status information may be determined as the current resource status information, and so on, such that each computation sub-graph is determined in turn as the current computation sub-graph based on an input dependency.

Step 2032, Determining a current action set based on the current computation sub-graph and the current resource status information

The current action set includes at least one candidate action information. Action information may be structured data, and may correspond to an intermediate instruction or a machine instruction. An intermediate instruction is an intermediate representation close to a machine instruction. Each intermediate instruction may correspond to one machine instruction. The action information may include a selectable optimization option. An optimization option for example may include one or more of an action type, a tensor selected for computation, a computation data size, a storage address of computation result data, etc. The action type for example may include a type such as loading, computation, storing, skipping, etc. Loading refers to loading of data (or a tensor) to be computed. Computation refers to performing computation on the loaded data to be computed. Storing refers to storing a computation result. Skipping refers to not performing the action. There are differences, between any two candidate action information in the current action, in at least one optimization option. For example, there are differences, between two candidate action information, in action types or computation data sizes, etc., to represent different selectable action information.

In some optional embodiments, each action information may be expressed as a vector (which may be referred to as an action vector) including one or more elements. Different elements of the vector represent different optimization options for selection. For example, the action type, the tensor selected for computation, the computation data size, the storage address of the computation result data described above serve as the elements of the vector, respectively, to form a structured action vector.

In some optional embodiments, the current action set serves as a current action space for the reinforcement learning environment, and the generation of instruction sub-sequence is transformed into action generation of reinforcement learning, which allows to effectively improve efficiency in search of the optimal instruction sequence.

Step 2033, Determining, based on the current computation sub-graph, the current resource status information, and the current action set, a current instruction sub-sequence corresponding to the current computation sub-graph

The current instruction sub-sequence corresponding to the current computation sub-graph may be obtained by iterative action selection according to an action selection policy for reinforcement learning based on the current computation sub-graph, the current resource status information, and the current action set. As the action selection policy for reinforcement learning is a policy learned by selecting an optimal action based on a hardware resource, instructions in the current instruction sub-sequence are instructions obtained by performing optimization based on an actual status of the hardware resource, which may effectively guarantee performance of the current instruction sub-sequence.

Step 2034, In response to an ending condition being not met, updating the current resource status information based on information on a resource occupied by the current instruction sub-sequence, to obtain updated resource status information, and determining, based on the updated resource status information, an instruction sub-sequence corresponding to a next computation sub-graph

The ending condition may include a condition that can represent completion of generation of the instruction sub-sequences for all the computation sub-graphs, such as a condition representing the current computation sub-graph being a last computation sub-graph corresponding to the computation graph, or the current computation sub-graph including an ending operator node of the computation graph, etc. Specifics of the ending condition is not limited. If the ending condition is not met, it means that there is still a computation sub-graph corresponding to which an instruction sub-sequence is not yet generated. Then, the current resource status information is updated according to the information on the resource occupied by the current instruction sub-sequence, to obtain the updated resource status information, and then the instruction sub-sequence corresponding to the next computation sub-graph is determined based on the updated resource status information. The instruction sub-sequence corresponding to the next computation sub-graph may be obtained based on the process of obtaining the current instruction sub-sequence as described above, specifics of which are not repeated. The above process is performed until the ending condition is met, to obtain the instruction sub-sequences corresponding respectively to the computation sub-graphs.

According to this embodiment, optimization selection for a computation sub-graph is transformed into a selectable action space (i.e., an action set) for reinforcement learning, thereby transforming generation of an instruction sub-sequence corresponding to a computation sub-graph into action selection for reinforcement learning, which further allows to improve efficiency of generating the optimal instruction sequence compared to other search modes.

FIG. 4 is a schematic flowchart of generating an instruction sub-sequence corresponding to a computation sub-graph according to an exemplary embodiment of this disclosure.

In some optional embodiments, a computation sub-graph includes one or more computation tasks. As shown in FIG. 4, the step 2033 of the determining, based on the current computation sub-graph, the current resource status information, and the current action set, a current instruction sub-sequence corresponding to the current computation sub-graph may include steps as follows.

Step 20331, Determining current action information from the current action set based on the current computation sub-graph, the current resource status information, and completion status information on computation task for the current computation sub-graph

Step 20332, Determining, based on the current action information, a current instruction and resource allocation information corresponding to the current instruction

Step 20333, Updating, based on the current instruction and the resource allocation information corresponding to the current instruction, the current resource status information and the completion status information on computation task, and repeatedly executing the determining the current action information from the current action set based on the current computation sub-graph, the current resource status information, and the completion status information on computation task for the current computation sub-graph

Step 20334, In response to all of the computation tasks of the current computation sub-graph being completed, obtaining, based on all of the determined current instructions, the current instruction sub-sequence corresponding to the current computation sub-graph

A computation task herein refers to a tensor computation task to be completed for a computation sub-graph. Computation tasks are recorded in units of individual data blocks of a tensor. Each tensor may include one or more data blocks. In case of more than one data block, computation for the tensor may be partitioned into computation on the more than one data blocks. The partitioning on data block may be implemented based on an operation supported by the processing unit in the hardware. For example, for addition of corresponding elements, addition of corresponding elements of two tensors of a large size may be partitioned into addition of each pair of tensors among a plurality of pairs of tensors of small sizes. Then, each of the tensors of the large size corresponds to the plurality of tensors (i.e., data blocks) of the small sizes. The completion status information on computation task refers to information on completion statuses of the respective computation tasks for a corresponding computation sub-graph, and may include two statuses indicating "completed" and "uncompleted", respectively. Each operator node corresponds to one or more computation tasks, such as a computation task of tensor data loading, a task of tensor computation, a task of storing computation result, etc.

In some optional embodiments, an optimal policy may be determined based on reinforcement learning, and optimal current action information may be determined from the current action set based on the optimal policy.

In some optional embodiments, the current action information may be structured data. The current instruction corresponding to the current action information may be obtained by parsing the structured data of the current action information. The current instruction is a machine executable instruction (i.e., a hardware-executable instruction). The current instruction may include an instruction corresponding to a current computation task. When the current instruction is determined, the resource allocation information corresponding to the current instruction may be determined based on the current instruction. The resource allocation information may include a storage resource, a processing resource, etc., corresponding to the current instruction. The storage resource corresponding to the current instruction may be determined based on a size of data that the current instruction involves. The processing resource corresponding to the current instruction may include a processing unit type, occupation time information, etc. The processing unit type may be determined according to an instruction type corresponding to the current instruction. The occupation time information may be calculated by simulating execution of the current instruction. That is, execution time on the current instruction may be calculated according to a computing rule corresponding to the current instruction. The current resource status information and the completion status information on the computation task may be updated based on the current instruction and the resource allocation information corresponding to the current instruction, where information, in the current resource status information, on a state of a resource corresponding to the current instruction is updated to "occupied", that is, completion status information on computation task corresponding to the current instruction is updated to "completed", guaranteeing real-time performance, accuracy, and reliability of the resource status information and the completion status information on computation task.

In some optional embodiments, in the generating of the instruction sequence, a release time on an occupied resource may further be determined in real time based on occupation time on the resource by an instruction for which the resource is allocated, then in generating of a subsequent instruction sequence, the resource is allocated in real time for a subsequent instruction based on the release time on the occupied resource, guaranteeing a resource utilization rate. The release time on the occupied resource may be represented by the fastest release time on the resource in the resource status information.

In some optional embodiments, after the current resource status information and the completion status information on computation task are updated, the updated current resource status information may be determined as the current resource status information, the updated completion status information on computation task may be determined as the completion status information on computation task. Then, the step of determining the current action information from the current action set based on the current computation sub-graph, the current resource status information, and the completion status information on computation task for the current computation sub-graph, and subsequent steps are executed repeatedly, to obtain a new current instruction (i.e., a next instruction of the above current instruction), and so on, until the all of the computation tasks of the current computation sub-graph are completed, to obtain respective instructions corresponding to all of the computation tasks. The current instruction sub-sequence corresponding to the current computation sub-graph is constituted by the each of the all of the determined current instructions according to orders of obtaining the instructions.

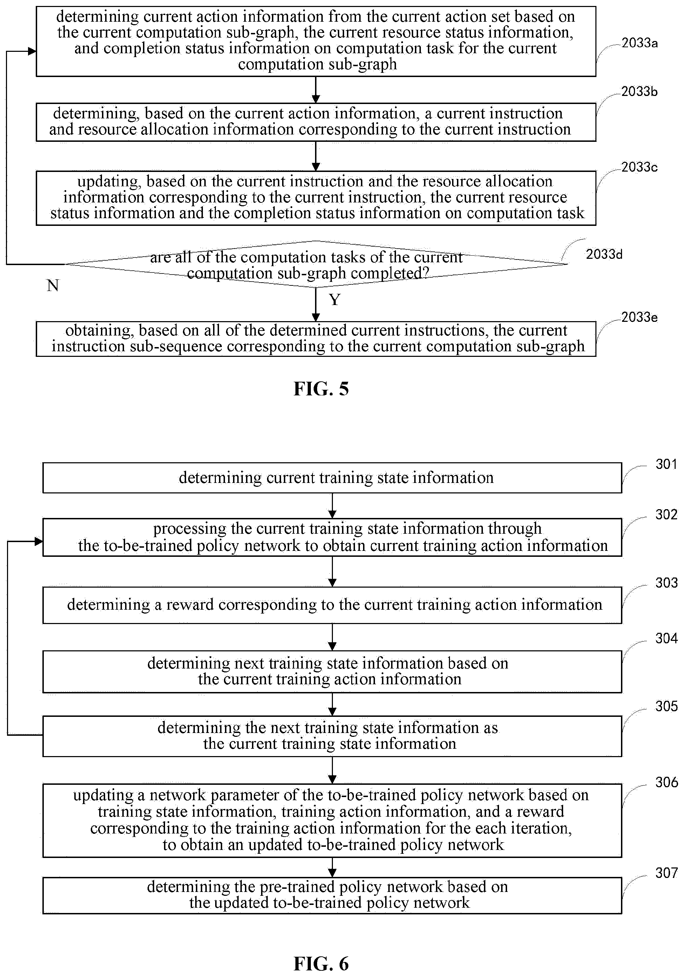

In some optional embodiments, FIG. 5 is a schematic flowchart of generating an instruction sub-sequence corresponding to a computation sub-graph according to another exemplary embodiment of this disclosure. As shown in FIG. 5, the generating an instruction sub-sequence corresponding to a computation sub-graph may include steps as follows.

Step 2033a, Determining current action information from the current action set based on the current computation sub-graph, the current resource status information, and completion status information on computation task for the current computation sub-graph

Step 2033b, Determining, based on the current action information, a current instruction and resource allocation information corresponding to the current instruction

Step 2033c, Updating, based on the current instruction and the resource allocation information corresponding to the current instruction, the current resource status information and the completion status information on computation task

Step 2033d, Determining whether all of the computation tasks of the current computation sub-graph being completed, where proceeding to step 2033a if not all of the computation tasks of the current computation sub-graph are completed, and proceeding to step 2033e if all of the computation tasks of the current computation sub-graph are completed

Step 2033e, Obtaining, based on all of the determined current instructions, the current instruction sub-sequence corresponding to the current computation sub-graph

For specific operations of step 2033a to step 2033e, reference may be made to the foregoing content, which is not repeated here.

According to this embodiment, an optimal action is determined from candidate actions based on a computation task in a computation sub-graph in conjunction with the computation sub-graph and a real-time resource status information, thereby obtaining instructions corresponding to respective computation tasks, and then obtaining the instruction sub-sequence corresponding to the computation sub-graph, implementing effective generation of the instruction sub-sequence for the computation sub-graph, improving instruction sequence generation efficiency.

In some optional embodiments, the determining, based on the current action information, a current instruction and resource allocation information corresponding to the current instruction may include a step as follows.

The current action information is decoded based on a decoding rule, to obtain the current instruction and the resource allocation information corresponding to the current instruction.

The decoding rule may be set based on a case of actual structured data of the action information. For example, the decoding rule may involve actual meanings of elements at different locations in the action information. For example, a first element corresponds to the instruction category, a second element corresponds to the tensor selected for computation, a third element corresponds to the computation data size, a fourth element corresponding to address information, etc. The current action information is decoded based on the decoding rule to obtain the respective elements, for obtaining resource allocation information corresponding to a current instruction of a current instruction set. The current instruction may be obtained based on the instruction category, the tensor selected for computation, the computation data size, etc. The resource allocation information corresponding to the current instruction may be obtained based on resource related information such as the address information.

The updating, based on the current instruction and the resource allocation information corresponding to the current instruction, the current resource status information and the completion status information on computation task may include steps as follows.

A completion status of a computation task corresponding to the current instruction in the completion status information on computation task is updated based on the current instruction, to obtain updated completion status information on computation task. The updated completion status information on computation task is determined as the completion status information on computation task. The current resource status information is updated based on the resource allocation information corresponding to the current instruction, to obtain updated current resource status information. The updated current resource status information is determined as the current resource status information.

According to this embodiment, after the optimal current action information is obtained, the current instruction is obtained by decoding, and the resource status information and the completion status information on the computation task may be updated in real time based on the current instruction, guaranteeing accuracy and effectiveness of the resource status information and the completion status information on the computation task.

In some optional embodiments, the determining the current action information from the current action set based on the current computation sub-graph, the current resource status information, and the completion status information on computation task for the current computation sub-graph may include a step as follows.

The current computation sub-graph, the current resource status information, and the completion status information on computation task are processed using a pre-trained policy network, to obtain the current action information.

The policy network is a pre-trained neural network simulating a policy function. The policy network may be expressed as $\pi(a|s,\theta)$, where $\theta$ represents a network parameter, $a$ represents an action (corresponding to action information according to embodiments of this disclosure), and $s$ represents a state. The state may include a computation sub-graph, the resource status information, and the completion status information on computation task for the computation sub-graph. The policy network is configured to predict the optimal action $a$ in the state $s$. Therefore, action prediction may be performed on the current computation sub-graph, the current resource status information, and the completion status information on computation task using the pre-trained policy network, to obtain the optimal current action information.

According to this embodiment, the current action information is determined based on the pre-trained policy network, and the optimal action is determined based on a reinforcement learning algorithm based on policy learning, which further allows to improve action predict efficiency and robustness of the current action information, and then further improve overall performance of the instruction sequence.

In some optional embodiments, the pre-trained policy network is obtained by: performing training on a to-be-trained policy network based on the computation graph and the resource status information, to obtain the trained policy network as the pre-trained policy network.

The to-be-trained policy network may be any neural network that can be implemented, which is not limited by embodiments of this disclosure. Training input data of the to-be-trained policy network may be determined based on the computation graph and the resource status information, and the training input data may be processed through the to-be-trained policy network to obtain training action information. Then, the network parameter may be continuously updated, based on a target function that maximizes a cumulative reward, according to a predicted reward for the training action information. When the training is completed, the trained policy network may be obtained for determining of the optimal action in compilation.

According to this embodiment, the policy network is trained using the computation graph and the resource status information on the hardware executing the instruction sequence, such that the policy network is enabled to learn how to determine the optimal action, thereby providing an effective policy network for mapping the computation graph to the instruction sequence.

FIG. 6 is a schematic flowchart of performing training on a policy network according to an exemplary embodiment of this disclosure.

In some optional embodiments, as shown in FIG. 6, the performing training on the to-be-trained policy network based on the computation graph and the resource status information, to obtain the trained policy network may include steps as follows.

Step 301, Determining current training state information

The current training state information includes a current training computation graph and current training resource status information. The current training computation graph is determined based on the computation graph. The current training resource status information is determined based on the resource status information on the hardware.

In some optional embodiments, the current training computation graph may be labeled with a completion status of a computation task.

In some optional embodiments, the current training computation graph may be one of the multiple computation sub-graphs determined based on the computation graph. For example, the current training computation graph may be a starting computation sub-graph or another computation sub-graph of the multiple computation sub-graphs. The current training resource status information may be the resource status information that is updated in real time based on an occupation status on a resource by determined training action information during the training.

Step 302, Processing the current training state information through the to-be-trained policy network to obtain current training action information

The current training state information may be input to the to-be-trained policy network, to obtain action distribution information. The action distribution information may include selection probability of each action information in a candidate training action set. Then, the current training action information may be obtained based on the action distribution information.

Step 303, Determining a reward corresponding to the current training action information

The reward corresponding to the current action information may be calculated based on the current training action information and a case of meeting user requirement on performance by performance (such as computation time, storage space occupation, etc.) of simulated execution of an instruction corresponding to the current training action information. For example, a user needs high computing efficiency, and there is sufficient storage space. Then, the reward corresponding to the current training action information may be calculated based on the computation time and a space occupation status of simulated execution of the instruction.

Step 304, Determining next training state information based on the current training action information

The completion status of the computation task in the current training computation graph and the current training resource status information may be updated based on the current training action information, and then the next training state information may be determined based on updated completion status of the computation task and updated current training resource status information. If all of the computation tasks in the current training computation graph are completed, a training computation graph included in the next training state is the next computation sub-graph; and if not, the next training computation graph is still the current training computation graph.

Step 305, Determining the next training state information as the current training state information, and repeatedly executing step 302, i.e., the processing the current training state information through the to-be-trained policy network to obtain current training action information

Ending condition of the repeating execution is that an iteration number reaches a total iteration number threshold, or other conditions. After the next training state information is determined, the next training state information is determined as the current training state information, and step 302 to step 305 are executed repeatedly, until the iteration number reaches the total iteration number threshold, to obtain training state information, training action information, and a reward for each iteration.

Step 306, Updating a network parameter of the to-be-trained policy network based on training state information, training action information, and a reward corresponding to the training action information for the each iteration, to obtain an updated to-be-trained policy network

A loss may be calculated based on the training state information, the training action information, and the reward for the each iteration, with a goal of maximizing the cumulative reward. Then, the network parameter of the to-be-trained policy network may be updated based on the loss, to obtain the updated to-be-trained policy network.

In some optional embodiments, the network parameter may be updated using any gradient method. The loss may be calculated with the goal of maximizing the cumulative reward. A gradient may be obtained by backward propagation. The network parameter may be updated based on the gradient and the reward. For example, the network parameter may be updated by an equation:

$$\theta_{new} = \theta + \beta \sum_{i=1}^{n} \gamma^{i-1} r_i \nabla_\theta ln\pi(a_i|s_i, \theta)$$

$\pi(, \theta)$ represents the policy network, $\theta$ represents the network parameter (i.e., a learnable parameter) of the to-be-trained policy network, $\theta$ may initially refer to a random value, $\theta_{new}$ represents an updated network parameter, $\beta$ may refer to a learning rate, $n$ represents the total iteration number threshold, $\gamma$ may refer to a discount factor, $r_i$ represents the reward of an i-th step, $a_i$ represents the action (i.e., the training action information) of the i-th step, $s_i$ represents the state (i.e., the training state information) of the i-th step, and $\pi(a_i|s_i, \theta)$ represents the action $a_i$ predicted by the policy network with the network parameter $\theta$ based on the state $s_i$.

The cumulative reward $R$ may be expressed by

$$R = \sum_{i=1}^{n} \gamma^{i-1} r_i$$

For each parameter thereof, reference may be made to the foregoing content.

In some optional embodiments, a policy gradient method may include a proximal policy optimization (PPO) method, a Monte Carlo tree method, etc., with no specific limitation.

Step 307, Determining the pre-trained policy network based on the updated to-be-trained policy network

After the updated to-be-trained policy network is obtained, it may be determined or tested whether the updated to-be-trained policy network meets the training ending condition. If the training ending condition is met, the updated to-be-trained policy network may be determined as the pre-trained policy network; and if the training ending condition is not met, the training on the updated to-be-trained policy network may continue based on the above process, until the training ending condition is met, to obtain the trained policy network. The training ending condition may include convergence of the cumulative reward, a number of training epochs reaching a preset number threshold, etc., with no specific limitation.

According to this embodiment, the training on the policy network is performed by reward maximization, such that the trained policy network is enabled to obtain optimal action information based on input state information, improving accuracy, effectiveness, and robustness of the policy network.

In some optional embodiments, the generating of the optimal instruction sequence may also be implemented by a reinforcement learning algorithm based on optimal action-value function learning, a reinforcement learning algorithm combining policy learning and optimal action-value function learning, etc., which is not limited to the above reinforcement learning algorithm based on policy learning. The reinforcement learning algorithm based on optimal action-value function learning may refer to simulating an action-value function via a neural network to form an action-value network, and determining optimal actions based on the action-value network, that is, optimal instructions respectively corresponding to each computing task are obtained, to obtain the optimal instruction sub-sequence corresponding to the computation sub-graph.

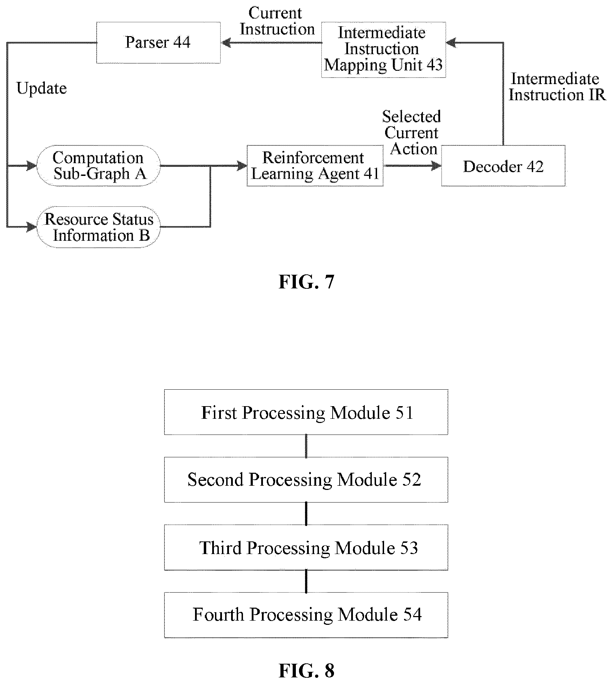

In some optional embodiments, FIG. 7 is a block diagram of a principle of generating an instruction sequence based on reinforcement learning according to an exemplary embodiment of this disclosure. As shown in FIG. 7, the instruction sequence may be generated through a process as follows. A reinforcement learning agent 41 generates a current action based on a computation sub-graph A and real-time resource status information B. A decoder 42 decodes the current action to obtain an intermediate instruction IR. An intermediate instruction mapping unit 43 maps the intermediate instruction IR to a machine executable current instruction. A parser 44 updates, based on the current instruction and the resource allocation information corresponding to the current instruction, the resource status information and completion status information on computation task for the computation sub-graph A. The parser 44 may further determine the current action set based on the current computation sub-graph A and the current resource status information B, and provides the current action set to the reinforcement learning agent 41. The optimal instruction sub-sequences for each computation sub-graph may be obtained by iteration through the above process.

In an actual application, the machine executable current instruction may also be obtained directly through decoding the current action by the decoder, without going through the intermediate instruction IR process, with no specific limitation.

Compared to heuristic search, generating an instruction sub-sequence for a computation sub-graph using a reinforcement learning model (also referred to as a reinforcement learning algorithm) allows to effectively reduce search time, and improve search efficiency, better meeting a need for batch processing of a great amount of data. In addition, reinforcement learning allows to improve robustness of the optimal action.

Respective embodiments of this disclosure may be implemented individually or as any combination without conflict, specifics of which may be set as needed, and not limited in this disclosure.

Any one method for generating an instruction sequence according to embodiments of this disclosure may be implemented by any appropriate device capable of data processing, including but not limited to a terminal device, a server, etc. Alternatively, the any one method for generating an instruction sequence according to embodiments of this disclosure may be implemented by a processor. For example, the processor implements the any one method for generating an instruction sequence mentioned in embodiments of this disclosure by calling respective instructions stored in a memory, which is not elaborated hereinafter.

Exemplary Apparatus

FIG. 8 is a block diagram of a structure of an apparatus for generating an instruction sequence according to an exemplary embodiment of this disclosure. The apparatus of the embodiment may be configured to implement the respective method embodiments of this disclosure. The apparatus as shown in FIG. 8 may include: a first processing module 51, a second processing module 52, a third processing module 53, and a fourth processing module 54.

The first processing module 51 may be configured to determine a computation graph corresponding to a neural network model to be compiled and resource status information on hardware executing the instruction sequence.

The second processing module 52 may be configured to partition the computation graph, to determine multiple computation sub-graphs.

The third processing module 53 may be configured to generate, based on the computation sub-graphs and the resource status information, instruction sub-sequences corresponding respectively to the computation sub-graphs.

The fourth processing module 54 may be configured to determine, based on the instruction sub-sequences, a target instruction sequence corresponding to the neural network model to be compiled.

In some optional embodiments, the third processing module 53 specifically may be configured to generate, based on the computation sub-graphs and the resource status information, the instruction sub-sequences corresponding respectively to the computation sub-graphs by reinforcement learning.

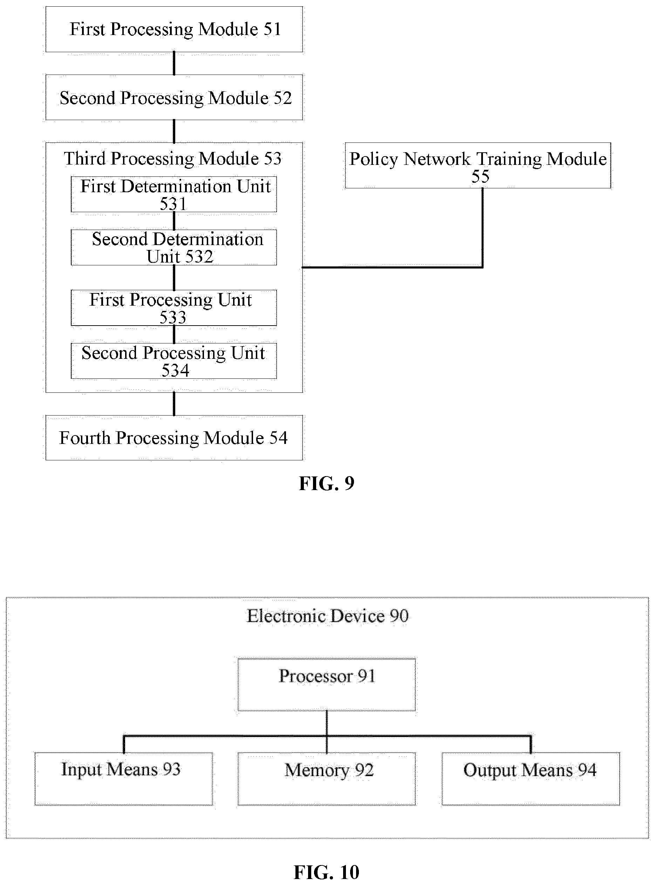

FIG. 9 is a block diagram of a structure of an apparatus for generating an instruction sequence according to another exemplary embodiment of this disclosure.

In some optional embodiments, as shown in FIG. 9, based on the embodiment shown in FIG. 8, the third processing module 53 may include: a first determination unit 531, a second determination unit 532, a first processing unit 533, and a second processing unit 534.

The first determination unit 531 may be configured to determine a current computation sub-graph and current resource status information.

The current computation sub-graph is determined based on dependencies among the computation sub-graphs in the computation graph. The current resource status information is determined based on the resource status information on a target terminal device.

The second determination unit 532 may be configured to determine a current action set based on the current computation sub-graph and the current resource status information.

The current action set includes at least one candidate action information.

The first processing unit 533 may be configured to determine, based on the current computation sub-graph, the current resource status information, and the current action set, a current instruction sub-sequence corresponding to the current computation sub-graph.

The second processing unit 534 may be configured to, in response to an ending condition being not met, update the current resource status information based on information on a resource occupied by the current instruction sub-sequence, to obtain updated resource status information, and determine, based on the updated resource status information, an instruction sub-sequence corresponding to a next computation sub-graph.

In some optional embodiments, a computation sub-graph includes one or more computation tasks. The first processing unit 533 specifically may be configured to:

determine current action information from the current action set based on the current computation sub-graph, the current resource status information, and completion status information on computation task for the current computation sub-graph; determine, based on the current action information, a current instruction and resource allocation information corresponding to the current instruction; update, based on the current instruction and the resource allocation information corresponding to the current instruction, the current resource status information and the completion status information on computation task, and repeatedly execute the determining the current action information from the current action set based on the current computation sub-graph, the current resource status information, and the completion status information on computation task for the current computation sub-graph; and in response to all of the computation tasks of the current computation sub-graph being completed, obtain, based on all of the determined current instructions, the current instruction sub-sequence corresponding to the current computation sub-graph

In some optional embodiments, the first processing unit 533 specifically may be configured to: decode the current action information based on a decoding rule, to obtain the current instruction and the resource allocation information corresponding to the current instruction.

The first processing unit 533 specifically may be configured to: update, based on the current instruction, a completion status of a computation task corresponding to the current instruction in the completion status information on computation task, to obtain updated completion status information on computation task, determine the updated completion status information on computation task as the completion status information on computation task; update the current resource status information, based on the resource allocation information corresponding to the current instruction, to obtain updated current resource status information, and determine the updated current resource status information as the current resource status information.

In some optional embodiments, the first processing unit 533 specifically may be configured to: process the current computation sub-graph, the current resource status information, and the completion status information on computation task through a pre-trained policy network, to obtain the current action information.

In some optional embodiments, as shown in FIG. 9, the apparatus according to embodiments of this disclosure further may include a policy network training module 55 configured to obtain a pre-trained policy network by: performing training on a to-be-trained policy network based on the computation graph and the resource status information, to obtain the trained policy network as the pre-trained policy network.

In some optional embodiments, the policy network training module 55 specifically may be configured to: determine current training state information. The current training state information includes a current training computation graph and current training resource status information. The current training computation graph is determined based on the computation graph. The current training resource status information is determined based on the resource status information on the target terminal device. The current training state information is processed through the to-be-trained policy network, to obtain current training action information. A reward corresponding to the current training action information is determined. Next training state information is determined based on the current training action information. The next training state information is determined as the current training state information, and the step of processing the current training state information through the to-be-trained policy network to obtain the current training action information is executed repeatedly. Ending condition of the repeated execution are that an iteration number reaches a total iteration number threshold. A network parameter of the to-be-trained policy network is updated based on training state information, training action information, and a reward corresponding to the training action information for the each iteration, to obtain an updated to-be-trained policy network. The pre-trained policy network is determined based on the updated to-be-trained policy network.

Refer to the corresponding beneficial technical effects in the section of exemplary method described above for beneficial technical effects corresponding to the exemplary embodiments of this apparatus, which are not repeated here.

Exemplary Electronic Device

FIG. 10 is a block diagram of a structure of an electronic device according to embodiments of this disclosure, where the electronic device 90 includes at least a processor 91 and a memory 92.

The processor 91 may be a central processing unit (CPU) or another form of processing unit having a data processing capability and/or an instruction execution capability, and may control other components in the electronic device 90 to implement desired functions.

The memory 92 may include one or more computer program products, which may include various forms of computer readable storage media, such as a volatile memory and/or a non-volatile memory. The volatile memory may include, for example, random access memory (RAM) and/or cache. The nonvolatile memory may include, for example, read-only memory (ROM), hard disk, and flash memory. One or more computer program instructions may be stored on the computer readable storage medium. The processor 91 may execute one or more of the program instructions to implement the method according to the various embodiments of this disclosure that are described above and/or other desired functions.

In an example, the electronic device 90 may further include an input means 93 and an output means 94. These components are connected to each other through a bus system and/or another form of connection mechanism (not shown).

The input means 93 may further include, for example, a keyboard and a mouse.

The output means 94 may output various information to the outside, and may include, for example, a display, a loudspeaker, a printer, a communication network, and a remote output means connected to the communication network.

Certainly, for simplicity, FIG. 10 shows only some of components in the electronic device 90 that are related to this disclosure, and components such as a bus and an input/output interface are omitted. In addition, according to specific application situations, the electronic device 90 may further include any other appropriate components.

Exemplary Computer Program Product And Computer Readable Storage Medium

In addition to the foregoing method and device, embodiments of this disclosure may also relate to a computer program product, which includes computer program instructions. When the instructions are run by a processor, the processor is enabled to perform the steps, of the method according to the embodiments of this disclosure, that are described in the "Exemplary Method" section of this specification.

The computer program product may be program code, written with one or any combination of a plurality of programming languages, which is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method according to the embodiments of this disclosure, that are described in the "Exemplary Method" section of this specification.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. Specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

**Claims**

1. A method for generating an instruction sequence, **characterized by** comprising:

    determining (201) a computation graph corresponding to a neural network model to be compiled and resource status information on hardware executing the instruction sequence;
    partitioning (202) the computation graph, to determine multiple computation sub-graphs;

generating (203), based on the computation sub-graphs and the resource status information, instruction sub-sequences corresponding respectively to the computation sub-graphs; and

determining (204), based on the instruction sub-sequences, a target instruction sequence corresponding to the neural network model to be compiled.

2. The method according to claim 1, wherein the generating (203), based on the computation sub-graphs and the resource status information, the instruction sub-sequences corresponding respectively to the computation sub-graphs comprises:

   determining (2031) a current computation sub-graph and current resource status information, wherein the current computation sub-graph is determined based on dependencies among the computation sub-graphs in the computation graph, and the current resource status information is determined based on the resource status information on the hardware;

   determining (2032) a current action set based on the current computation sub-graph and the current resource status information, wherein the current action set comprises at least one candidate action information;

   determining (2033), based on the current computation sub-graph, the current resource status information, and the current action set, a current instruction sub-sequence corresponding to the current computation sub-graph; and

   in response to an ending condition being not met, updating (2034) the current resource status information based on information on a resource occupied by the current instruction sub-sequence, to obtain updated resource status information, and determining, based on the updated resource status information, an instruction sub-sequence corresponding to a next computation sub-graph.

3. The method according to claim 2, wherein a computation sub-graph comprises a computation task, and the determining (2033), based on the current computation sub-graph, the current resource status information, and the current action set, the current instruction sub-sequence corresponding to the current computation sub-graph comprises:

   determining (20331) current action information from the current action set based on the current computation sub-graph, the current resource status information, and completion status information on computation task for the current computation sub-graph;

   determining (20332), based on the current action information, a current instruction and resource allocation information corresponding to the current instruction;

   updating (20333), based on the current instruction and the resource allocation information corresponding to the current instruction, the current resource status information and the completion status information on computation task, and repeatedly executing the determining the current action information from the current action set based on the current computation sub-graph, the current resource status information, and the completion status information on computation task for the current computation sub-graph; and

   in response to all of the computation tasks of the current computation sub-graph being completed, obtaining (20334), based on all of the determined current instructions, the current instruction sub-sequence corresponding to the current computation sub-graph.

4. The method according to claim 3, wherein the determining (20332), based on the current action information, a current instruction and resource allocation information corresponding to the current instruction comprises:

   decoding the current action information based on a decoding rule, to obtain the current instruction and the resource allocation information corresponding to the current instruction, and

   wherein the updating, based on the current instruction and the resource allocation information corresponding to the current instruction, the current resource status information and the completion status information on computation task comprises:

      updating, based on the current instruction, a completion status of a computation task corresponding to the current instruction in the completion status information on computation task, to obtain updated completion status information on computation task, and determining the updated completion status information on computation task as the completion status information on computation task; and

      updating the current resource status information based on the resource allocation information corresponding to the current instruction, to obtain updated current resource status information, and determining the updated current resource status information as the current resource status information.

5. The method according to claim 3, wherein the determining (20333) the current action information from the current action set based on the current computation sub-graph, the current resource status information, and the completion status information on computation task for the current computation sub-graph comprises:
processing the current computation sub-graph, the current resource status information, and the completion status information on computation task through a pre-trained policy network, to obtain the current action information.

6. The method according to claim 5, wherein the pre-trained policy network is obtained by:
performing training on a to-be-trained policy network based on the computation graph and the resource status information, to obtain the trained policy network as the pre-trained policy network.

7. The method according to claim 6, wherein the performing training on the to-be-trained policy network based on the computation graph and the resource status information, to obtain the trained policy network as the pre-trained policy network comprises:

determining (301) current training state information comprising a current training computation graph and current training resource status information, wherein the current training computation graph is determined based on the computation graph, and the current training resource status information is determined based on the resource status information on the hardware;
processing (302) the current training state information through the to-be-trained policy network to obtain current training action information;
determining (303) a reward corresponding to the current training action information;
determining (304) next training state information based on the current training action information;
determining (305) the next training state information as the current training state information, and repeatedly executing the processing the current training state information through the to-be-trained policy network to obtain current training action information;
updating (306) a network parameter of the to-be-trained policy network based on training state information, training action information, and a reward corresponding to the training action information for the each iteration, to obtain an updated to-be-trained policy network; and
determining (307) the pre-trained policy network based on the updated to-be-trained policy network.

8. An apparatus for generating an instruction sequence, **characterized by** comprising:

a first processing module (51), configured to determine a computation graph corresponding to a neural network model to be compiled and resource status information on hardware executing the instruction sequence;
a second processing module (52), configured to partition the computation graph, to determine multiple computation sub-graphs;
a third processing module (53), configured to generate, based on the computation sub-graphs and the resource status information, instruction sub-sequences corresponding respectively to the computation sub-graphs; and
a fourth processing module (54), configured to determine, based on the instruction sub-sequences, a target instruction sequence corresponding to the neural network model to be compiled.

9. The apparatus according to claim 8, wherein the third processing module (53) comprises:

a first determination unit (531), configured to determine a current computation sub-graph and current resource status information, wherein the current computation sub-graph is determined based on dependencies among the computation sub-graphs in the computation graph, and the current resource status information is determined based on the resource status information on the hardware;
a second determination unit (532), configured to determine a current action set based on the current computation sub-graph and the current resource status information, wherein the current action set comprises at least one candidate action information;
a first processing unit (533), configured to determine, based on the current computation sub-graph, the current resource status information, and the current action set, a current instruction sub-sequence corresponding to the current computation sub-graph; and
a second processing unit (534), configured to, in response to an ending condition being not met, update the current resource status information based on information on a resource occupied by the current instruction sub-sequence, to obtain updated resource status information, and determine, based on the updated resource status information, an instruction sub-sequence corresponding to a next computation sub-graph.

10. The apparatus according to claim 9, wherein a computation sub-graph comprises a computation task, and the first processing unit (533) is configured to determine, based on the current computation subgraph, the current resource status information, and the current action set, the current instruction subsequence corresponding to the current computation sub-graph through:

> determining current action information from the current action set based on the current computation sub-graph, the current resource status information, and completion status information on computation task for the current computation sub-graph;
> determining, based on the current action information, a current instruction and resource allocation information corresponding to the current instruction;
> updating, based on the current instruction and the resource allocation information corresponding to the current instruction, the current resource status information and the completion status information on computation task, and repeatedly executing the determining the current action information from the current action set based on the current computation sub-graph, the current resource status information, and the completion status information on computation task for the current computation sub-graph; and
> in response to all of the computation tasks of the current computation sub-graph being completed, obtaining, based on all of the determined current instructions, the current instruction subsequence corresponding to the current computation sub-graph.

11. The apparatus according to claim 10, wherein the determining, based on the current action information, a current instruction and resource allocation information corresponding to the current instruction comprises:

> decoding the current action information based on a decoding rule, to obtain the current instruction and the resource allocation information corresponding to the current instruction, and
> wherein the updating, based on the current instruction and the resource allocation information corresponding to the current instruction, the current resource status information and the completion status information on computation task comprises:

>> updating, based on the current instruction, a completion status of a computation task corresponding to the current instruction in the completion status information on computation task, to obtain updated completion status information on computation task, and determining the updated completion status information on computation task as the completion status information on computation task; and
updating the current resource status information based on the resource allocation information corresponding to the current instruction, to obtain updated current resource status information, and determining the updated current resource status information as the current resource status information.

12. The apparatus according to claim 10, wherein the determining the current action information from the current action set based on the current computation sub-graph, the current resource status information, and the completion status information on computation task for the current computation sub-graph comprises:
processing the current computation sub-graph, the current resource status information, and the completion status information on computation task through a pre-trained policy network, to obtain the current action information.

13. The apparatus according to claim 12, wherein the pre-trained policy network is obtained by:
performing training on a to-be-trained policy network based on the computation graph and the resource status information, to obtain the trained policy network as the pre-trained policy network.

14. A non-transitory computer readable storage medium, on which a computer program is stored, **characterized in that**, the computer program, when executed by a processor, causes the processor to implement the method according to any one of claims 1-7.

15. An electronic device (90), **characterized by** comprising:

> a processor (91); and
> a memory (92), configured to store processor-executable instructions, wherein
> the processor (91) is configured to read the executable instructions from the memory (92), and execute the instructions to implement the method according to any one of claims 1-7.

Resource Status
Information On Hardware
Executing Instruction
Sequence

| Neural Network Model To Be Compiled | → | Conversion Module 11 | → Computation Graph → | Optimized Mapping Module 12 | → Target Instruction Sequence |

**FIG. 1**

| determining a computation graph corresponding to a neural network model to be compiled and resource status information on hardware executing the instruction sequence | 201 |

| partitioning the computation graph, to determine multiple computation sub-graphs | 202 |

| generating, based on the computation sub-graphs and the resource status information, instruction sub-sequences corresponding respectively to the computation sub-graphs | 203 |

| determining, based on the instruction sub-sequences, a target instruction sequence corresponding to the neural network model to be compiled | 204 |

**FIG. 2**

determining a computation graph corresponding to a neural network model to be compiled and resource status information on hardware executing the instruction sequence — 201

↓

partitioning the computation graph, to determine multiple computation sub-graphs — 202

↓

determining a current computation sub-graph and current resource status information — 2031

↓

determining a current action set based on the current computation sub-graph and the current resource status information — 2032

↓

determining, based on the current computation sub-graph, the current resource status information, and the current action set, a current instruction sub-sequence corresponding to the current computation sub-graph — 2033

↓

in response to an ending condition being not met, updating the current resource status information based on information on a resource occupied by the current instruction sub-sequence, to obtain updated resource status information, and determining, based on the updated resource status information, an instruction sub-sequence corresponding to a next computation sub-graph — 2034

↓

determining, based on the instruction sub-sequences, a target instruction sequence corresponding to the neural network model to be compiled — 204

**FIG. 3**

determining current action information from the current action set based on the current computation sub-graph, the current resource status information, and completion status information on computation task for the current computation sub-graph — 20331

↓

determining, based on the current action information, a current instruction and resource allocation information corresponding to the current instruction — 20332

↓

updating, based on the current instruction and the resource allocation information corresponding to the current instruction, the current resource status information and the completion status information on computation task, and repeatedly executing the determining the current action information from the current action set based on the current computation sub-graph, the current resource status information, and the completion status information on computation task for the current computation sub-graph; and — 20333

↓

in response to all of the computation tasks of the current computation sub-graph being completed, obtaining, based on all of the determined current instructions, the current instruction sub-sequence corresponding to the current computation sub-graph — 20334

**FIG. 4**

determining current action information from the current action set based on the current computation sub-graph, the current resource status information, and completion status information on computation task for the current computation sub-graph ⟋2033a

determining, based on the current action information, a current instruction and resource allocation information corresponding to the current instruction ⟋2033b

updating, based on the current instruction and the resource allocation information corresponding to the current instruction, the current resource status information and the completion status information on computation task ⟋2033c

are all of the computation tasks of the current computation sub-graph completed? ⟋2033d

N

Y

obtaining, based on all of the determined current instructions, the current instruction sub-sequence corresponding to the current computation sub-graph ⟋2033e

**FIG. 5**

determining current training state information ⟋301

processing the current training state information through the to-be-trained policy network to obtain current training action information ⟋302

determining a reward corresponding to the current training action information ⟋303

determining next training state information based on the current training action information ⟋304

determining the next training state information as the current training state information ⟋305

updating a network parameter of the to-be-trained policy network based on training state information, training action information, and a reward corresponding to the training action information for the each iteration, to obtain an updated to-be-trained policy network ⟋306

determining the pre-trained policy network based on the updated to-be-trained policy network ⟋307

**FIG. 6**

Current
Instruction

Parser 44 ← Intermediate Instruction Mapping Unit 43 ←

Update

Intermediate Instruction IR

Selected Current Action

Computation Sub-Graph A → Reinforcement Learning Agent 41 → Decoder 42

Resource Status Information B

**FIG. 7**

First Processing Module 51

Second Processing Module 52

Third Processing Module 53

Fourth Processing Module 54

**FIG. 8**

First Processing Module 51

Second Processing Module 52

Third Processing Module 53

First Determination Unit 531

Second Determination Unit 532

First Processing Unit 533

Second Processing Unit 534

Policy Network Training Module 55

Fourth Processing Module 54

**FIG. 9**

Electronic Device 90

Processor 91

Input Means 93

Memory 92

Output Means 94

**FIG. 10**

Europäisches
Patentamt

European
Patent Office

Office européen
des brevets

**EUROPEAN SEARCH REPORT**

Application Number

EP 25 17 9069

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 339 746 A (SHANGHAI ANTING HORIZON INTELLIGENT TRANSP TECHNOLOGY CO LTD) 27 June 2023 (2023-06-27) * abstract * & US 2024/330666 A1 (SHEN JUNZHI [CN]) 3 October 2024 (2024-10-03) * abstract * * page 1, paragraph 4 - page 1, paragraph 6 * * page 2, paragraph 44 - page 6, paragraph 88 * * page 7, paragraph 104 - page 7, paragraph 112 * ----- | 1-15 | INV. G06F8/41 G06N3/08 |
| A | CN 116 627 503 A (BEIJING HORIZON INFORMATION TECH CO LTD) 22 August 2023 (2023-08-22) * abstract * & US 2024/394531 A1 (SHEN BILUO [CN] ET AL) 28 November 2024 (2024-11-28) * abstract * * page 1, paragraph 5 - page 2, paragraph 13 * * page 2, paragraph 34 - page 5, paragraph 56 * * page 6, paragraph 70 - page 8, paragraph 100 * * page 9, paragraph 114 - page 10, paragraph 139 * ----- | 1-15 | |

TECHNICAL FIELDS
SEARCHED (IPC)

G06F
G06N

The present search report has been drawn up for all claims

| Place of search | Date of completion of the search | Examiner |
|---|---|---|
| Munich | 9 October 2025 | Lelait, Sylvain |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...........................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 17 9069

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2025

| Patent document cited in search report | | Publication date | Patent family member(s) | | Publication date |
|---|---|---|---|---|---|
| CN 116339746 | A | 27-06-2023 | CN | 116339746 A | 27-06-2023 |
| | | | EP | 4443289 A1 | 09-10-2024 |
| | | | US | 2024330666 A1 | 03-10-2024 |
| CN 116627503 | A | 22-08-2023 | CN | 116627503 A | 22-08-2023 |
| | | | EP | 4468202 A1 | 27-11-2024 |
| | | | JP | 7639192 B2 | 04-03-2025 |
| | | | JP | 2024169291 A | 05-12-2024 |
| | | | US | 2024394531 A1 | 28-11-2024 |

EPO FORM P0459

For more details about this annex : see Official Journal of the European Patent Office, No. 12/82